# EUROPÄISCHE PATENTSCHRIFT

(11) **EP 0 497 193 B1**
(45) Veröffentlichungstag und Bekanntmachung des Hinweises auf die Patenterteilung: **12.04.1995**
(21) Anmeldenummer: 92100955.1
(22) Anmeldetag: 22.01.1992
(51) Int. Cl.: B23Q 3/10, B23Q 3/06

(54) **Spannelement und Bride**
Mounting device and workpiece clamp
Elément de serrage et bride

(30) Priorität: 29.01.1991 CH 266/91
(43) Veröffentlichungstag der Anmeldung: 05.08.1992
(73) Patentinhaber: Saurer-Allma GmbH, D-87437 Kempten (DE)
(72) Erfinder: Brot, Waldemar, CH-8352 Räterschen (CH)
(74) Vertreter: Pfister, Helmut, Dipl.-Ing.

(56) Entgegenhaltungen:
- EP-A- 0 237 490
- CH-A- 450 871
- DE-C- 3 733 708
- DE-U- 8 426 444
- DE-U- 9 012 822
- FR-A- 2 560 092
- GB-A- 2 136 129
- US-A- 2 401 054

## Beschreibung

Die Erfindung betrifft eine Spannvorrichtung nach dem Oberbegriff des Anspruches 1.

Eine Spannvorrichtung der vorstehend angegebenen Gattung ist durch das Dokument DE-U 90 12 822 bekannt geworden. Der dort beschriebene Spannkörper wird auf einer Spannfläche einer geeigneten Platte angeordnet, die gleichförmig verteilte Aufnahmevertiefungen aufweist. Die Aufnahmevertiefungen weisen dabei in beiden rechtwinklig zueinander verlaufenden Richtungen das gleiche Rastermaß auf. Der Spannkörper, der in der bekannten Anordnung benützt wird, besitzt an einem Befestigungfuß insgesamt acht Bohrungen zur Aufnahme von Befestigungsmitteln zur Verbindung mit der Rasterplatte. Die Befestigungsöffnungen sind dabei gleichmäßig verteilt. Der Radius des Kreises entspricht dabei dem Rastermaß. Auf diese Weise sind die Spannkörper bei der bekannten Einrichtung jeweils nur um das Rastermaß versetzbar. Da aber das Rastermaß aus Stabilitätsgründen bestimmte Abmessungen nicht unterschreiten kann, ist nur eine sehr grobe Anpassung der Spannkörper an das jeweilige Werkstück möglich. Dies führt dazu, daß die Spannkörper speziell dem Werkstück angepaßt werden müssen. Auch erschwert dieser Umstand die Reproduzierbarkeit der Anordnung der Spannkörper auf der Spannfläche der Spannplatte, was dann besonders nachteilig ist, wenn abwechselnd verschiedene Werkstücke bearbeitet werden sollen. Auch ist die Anschaffung und die Lagerhaltung angepaßter Spannkörper aufwendig.

Der Erfindung liegt die Aufgabe zugrunde, die bekannte Spannvorrichtung dahingehend weiter zu entwickeln, daß ein einziges Spannelement bzw. ein einziger Spannkörper für die verschiedensten Zwecke einsetzbar und an verschiedene Werkstücke anpaßbar ist.

Die Erfindung geht aus von einer Spannvorrichtung der eingangs angegebenen Gattung und schlägt die Merkmale des Anspruches 1 vor.

Die Unteransprüche betreffen vorteilhafte Weiterentwicklungen und Ausgestaltungen der Erfindung.

Weitere Einzelheiten der Erfindung ergeben sich anhand der nachfolgenden Beschreibung der in der Zeichnung schematisch dargestellten Ausführungsbeispiele. Es zeigen:
- Fig. 1A und 1B: eine erfindungsgemäße Spannvorrichtung in ihrer Anwendung als Hohlprisma, d.h. zum Spannen von Werkstücken mit Hohlräumen, auf Spannflächen mit verschiedenen Aufnahmevertiefungen, wozu die
- Fig. 2A und 2B: jeweils Draufsichten zur Erläuterung der erfindungsgemäßen Ausbildung und ihre Vorteile veranschaulichen;
- Fig. 3: eine andere Ausführungsform der Erfindung im Schnitt in der Anwendung als Anschlag- bzw. als Anstellelement für ein Werkstück;
- Fig. 4: besondere Anwendungen dieser Ausführungsform gemäß Fig. 3 für einen Höhenspannblock bzw. einen verstellbaren Anschlag und Unterlage, welch letztere Anwendung unter Verwendung eines weiteren erfindungsgemäßen Ausführungsbeispieles veranschaulicht ist, das in
- Fig. 5: in Draufsicht bei Anwendung als Horizontalspanner veranschaulicht wird, wobei
- Fig. 6: die zugehörige Seitenansicht, teilweise im Schnitt darstellt;
- Fig. 7: eine Spannklaue bzw. Bride für die Spannvorrichtung gemäß der Erfindung in einem Schnitt nach der Linie VII-VII der Fig. 8, und die
- Fig. 8: eine Druntersicht auf die Bride der Fig. 7 im Sinne des Pfeiles VIII in dieser letzteren Figung; die
- Fig. 9 und 10: weitere Anwendungsbeispiele einer erfindungsgemäßen Spannvorrichtung nach Fig. 3, wobei Fig. 9 die Anwendungen als Pendel-Anschlag- und Anstellelement veranschaulicht, wogegen anhand der Fig. 10 die Anwendung als starrer Anschlag bzw. als Doppelspanner erläutert wird;
- Fig. 11: die Anwendung erfindungsgemäßer Spannvorrichtungen nach Fig. 1 und 5 als Grundelemente eines Höhenspanners bzw. als Unterlagenset;
- Fig. 12: das Einspannen runder Teile an einer Spannplatte bzw. die Anwendung zweier Briden an einem Spannelement zur Erzielung erhöhter Spannkraft;
- Fig. 13: die Anwendung einer erfindungsgemäßen Spannvorrichtung als Universal-Anschlagelement zum Ausrichten in drei räumlichen Achsrichtungen;
- Fig. 14: die Anwendung mehrerer erfindungsgemäßer Spannvorrichtungen als Werkstückauflieger;
- Fig. 15: das Aufspannen mittels mehrerer erfindungsgemäßer Spannvorrichtungen zum Profilfräsen;
- Fig. 16: die Anwendung als Prismen-Spannlager bei einem weiteren Ausführungsbeispiel der Erfindung;
- Fig. 17: eine weitere Ausführungsform einer erfindungsgemäßen Spannvorrichtung und
- Fig. 18: eine Variante einer Spannklaue bzw. Bride.

Der Spannkörper, der bei der Erfindung verwendet wird, wird nachstehend auch teilweise als Spannelement bezeichnet.

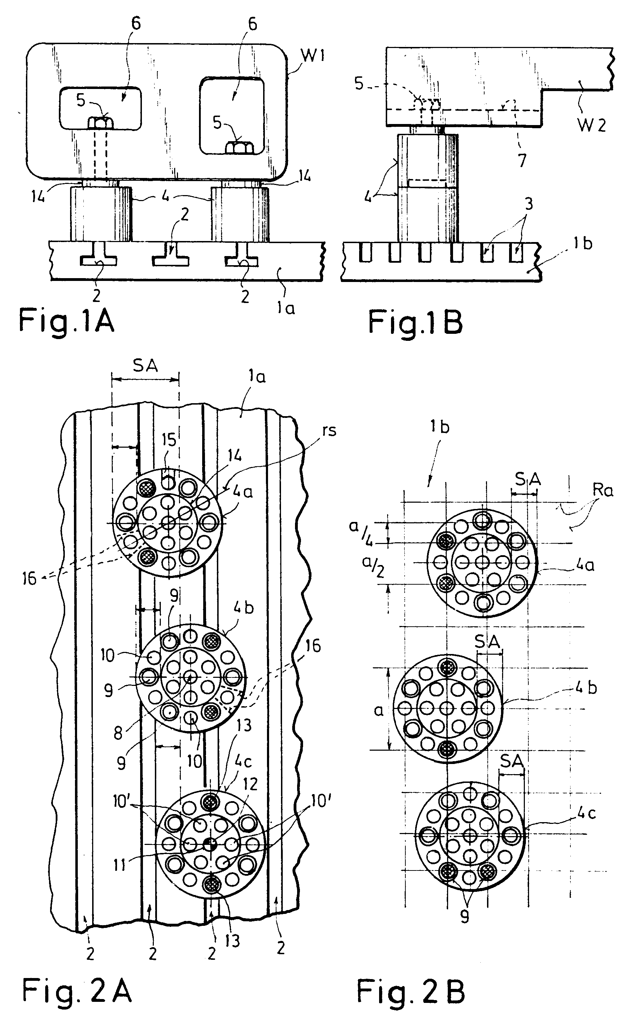

In den Fig. 1A, 1B sind zwei Spannplatten 1a, 1b dargestellt, von denen die Spannplatte 1a mit T-Nuten 2, die Spannplatte 1b mit einem Lochraster von Aufnahmelöchern 3 jeweils in vorbestimmten Teilungsabständen versehen ist. In diesen Aufnahmevertiefungen 2, 3 können erfindungsgemässe Spannelemente 4 in später noch beschreibender Weise befestigt werden. Wie anhand der Fig. 2A, 2B noch erläutert wird, sind diese Elemente 4 mit in einer ganz bestimmten Geometrie angeordneten Spannbohrungen vesehen, die mit einem Innengewinde zum Einschrauben einer Spannschraube 5 versehen ist. Auf diese Weise können Werkstücke W1 mit Hohlräumen 6 oder mit abstehenden Flanschen 7 festgespannt werden. Dabei ist die Position der Werkstücke W1, W2 durch die genaue Positionierung der Spannelemente 4 an den Spannflächen 1a, 1b bzw. allenfalls durch eine Oeffnung durchsetzende Spannschrauben 5 in den Werkstücken reproduzierbar gesichert, so dass eine Just-in-time-Produktion, d.h. die Fertigung kleiner Mengen zu verschiedenen Zeitpunkten, wenn sie gerade benötigt werden, erleichtert und gesichert. Es sei erwähnt, dass für die in den Fig. 1A, 1B dargestellte Funktion eines Hohlprismas bisher besondere Spannelemente verwendet wurden, und es wird noch gezeigt werden, welche weiteren, bisher von besonderen Spannelementen erfüllte Funktionen, sich mit einem erfindungsgemässen Spannelement erfüllen lassen.

Wesentlich für die Erfindung ist, dass - im Gegensatz zu bisher, wobei die Anordnung der Befestigungsöffnungen und Spannbohrungen im wesentlichen dem Teilungsraster entsprach - diese Oeffnungen und Bohrungen entlang wenigstens eines Kreises um eine Achse angeordnet sind. Dies zeigen die Fig. 2A und 2B deutlich. Nach Fig. 2A sind drei etwa zylindrisch ausgebildete Spannelemente 4a bis 4c an einer Spannplatte 1a mit T-Nuten in zueinander parallelen Reihen in verschiedenen Lagen befestigt. Die zylindrische Ausbildung der Spannelemente 4 ist an sich bevorzugt, nicht zuletzt, weil sie auch einfach herstellbar ist, aber nicht unbedingt erforderlich und könnte durch andere Formen, wie eine prismatische Form oder eine der später gezeigten ersetzt werden.

Wie ersichtlich, besitzt jedes Spannelement zwei Kreise von Bohrungsöffnungen, wobei die Kreise zueinander konzentrisch um eine Längsachse 8 verlaufen und unterschiedlichen Radius besitzen, im äusseren Kreise sind mit Versenkungen für Zylinderkopfschrauben od.dgl. ausgestattete Befestigungsöffnungen 9, zwischen denen sich Spannbohrungen 10 befinden. In einer solchen Spannbohrung sind jeweils die in den Fig. 1A, 1B gezeigten Schrauben 5 eingeschraubt.

Die jeweilige Stellung des Spannelementes 4 an der Spannfläche 1a bzw. 1b wird durch die Lage der Befestigungsöffnungen 9 bestimmt, über die das Element 4 an der Fläche 1a bzw. 1b befestigt ist. In Fig. 1A sind diejenigen Befestigungsöffnungen dunkel (kreuzweise) schraffiert, an denen die Befestigung erfolgt, und es ist ersichtlich, dass durch verschiedener Wahl der Befestigungsöffnungen 9 ein breiter Verstellbereich SA erzielt werden kann. Dabei sind die Befestigungsöffnungen vorzugsweise von Bohrungen gebildet, obwohl es ebenso denkbar wäre, sie als Einschnitte von der Mantelfläche der Elemente her zu formen. Allerdings wäre dies der geforderten Genauigkeit allenfalls abträglich. Die Stellung einer Spannschraube 5 relativ zur Achse 8 hängt winkelmässig einmal von den gewählten Spannbohrungen 10, aber auch von der gewählten Befestigungsöffnung 9 ab, wie man aus dem Vergleich der Lochpositionen der Elemente 4a bis 4c sehen kann. Daher wäre es denkbar, die eine oder andere der Befestigungsöffnungen 9 durch Spannbohrungen 10 zu ersetzen und umgekehrt. Es ist vorgesehen, die Bohrungen und Oeffnungen in gleichen Winkelabständen anzuordnen, wie dies bei den Fig. 2A, 2B der Fall ist, denn es ergeben sich aus dieser Anordnung die anhand der Fig. 2B besprochenen Vorteile.

Im Prinzip könnte ein einfacher Kreis von Oeffnungen 9 und Bohrungen 10 für viele Anwendungsformen ausreichend sein. Hier befinden sich innerhalb des gezeigten inneren Kreises lediglich Spannbohrungen 10'. Zusätzlich ist an der Achse 8 ein Positionierloch 11 vorgesehen, in dem im Falle des Elementes 4c ein Positionierstift 12, in die T-Nut 2 reichend, eingesetzt ist, um das Element vor dem Festschrauben mit Hilfe von Befestigungsschrauben 13 vorzupositionieren. Auch das Positionierloch 11 ist als Bohrung ausgeführt, obwohl es auch andere Formen (z.B. mehreckig) möglich wären.

Wie besonders gut aus Fig. 1A erkennbar ist, ist die obere Stirnfläche des zylinderförmigen Spannelementes 4 im wesentlichen als ebene Fläche ausgebildet, was der Anforderung nach einer definierten Lage des Werkstückes entgegenkommt. Zweckmässig ist aber die Stirnfläche in der gezeigten Weise abgestuft, wobei der den inneren Kreis von Spannbohrungen 10' tragende Innenteil eine Erhebung 14 bildet. Der Zweck dieser Massnahme wird später noch erläutert werden.

Wie ferner aus Fig. 2A ersichtlich ist, ist es - gemäss einer bevorzugten Ausführung - erwünscht, wenn die Spannbohrungen 10' des inneren Kreises jeweils am selben Radiusstrahl rs liegen wie die jeweilige Spannbohrung 10 des äusseren Kreises. Es wurde aber schon erwähnt, dass gegebenenfalls die Befestigungsöffnungen 9 mit den Spannbohrungen 10 vertauschbar sind, in welchem Falle dann am jeweiligen Radiusstrahl rs eine innere Spannbohrung 10' und eine äussere Befestigungsöffnung 9 läge, was aber nicht bevorzugt ist. Das Verhältnis der Radien der beiden Kreise, jeweils von der Achse 8 bis zu den Mittelpunkten der Spannbohrungen 10 bzw. 10' gerechnet, könnte an sich verschieden sein, doch ergeben sich vorteilhafte geometrische Verhältnisse im Zusammenhang mit manchen Anwendungen, wenn das Radiusverhältnis 1 : 2 beträgt.

In Fig. 2B ist die Lochplatte 1b oder eine äquivalente von entlang dem gezeigten Raster Ra kreuzweise verlaufenden T-Nuten durchzogene Spannfläche gezeigt. Wenn nun die doppelte Rasterteilung a beträgt, so ergibt sich bei der Anordnung der Oeffnungen und Bohrungen an einem Sechseck, wie dargestellt, in vorteilhafter Weise lediglich durch richtige Wahl der Befestigungsöffnungen 9 nicht nur eine entsprechende Bereichsverschiebung, sondern die Lochabstände entsprechen jeweils den Massen a/2 und a/4, wobei die letztere Unterteilung, die für manche Anwendungen von Vorteil ist, mit den am Markte befindlichen Spannelementen noch gar nicht erzielt werden konnte, zumindest nicht in derart reproduzierbarer Weise.

Die erwünschte Reproduzierbarkeit ist ja vor allem durch die diskrete Unterteilung mit Hilfe der Bohrungen 10 und der Oeffnungen 9 gegeben. Für ein bestimmtes Werkstück braucht also nur die Befestigungsöffnung und die ausgewählte Spannbohrung notiert zu werden, um später jeweils in genau gleicher Weise ein Werkstück festspannen zu können. Es mögen daher zur Erleichterung gegebenenfalls Beschriftungsfelder 15 (vgl. Fig. 2A) den einzelnen Oeffnungen bzw. Bohrungen zugeordnet sein, wie eines anhand des Elementes 4a gezeigt ist, um etwa die zugehörige Oeffnung bzw. Bohrung zu numerieren oder mit Buchstaben zu kennzeichnen. Selbstverständlich könnten solche Schriftfelder 15 statt an der Stirnfläche auch an der Mantelfläche des Elementes 4 bzw. seiner Erhebung 14 angebracht werden.

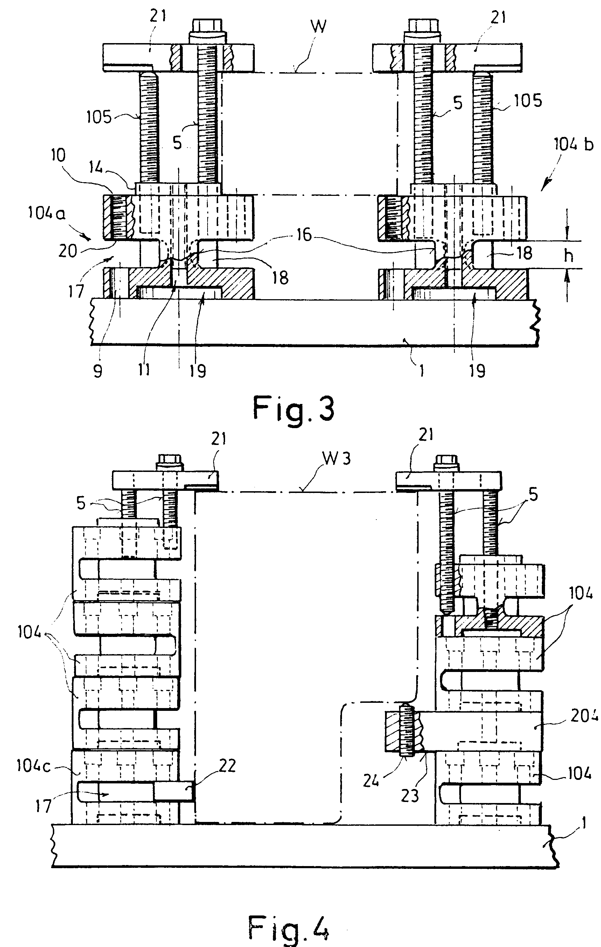

An den Spannelementen 4a bis 4c der Fig. 2A und 2B sind strichliert Begrenzungsflächen 16 eingezeichnet, die an sich gar nicht zu dem in den Fig. 1A und 1B gezeigten Ausführungsbeispiel eines Spannelementes 4 gehören, sondern zu der in Fig. 3 dargestellten Ausführungsform, die unten noch beschrieben wird. Zunächst sei aber noch darauf hingewiesen, dass im Falle der Fig. 1B der Zweck und der Vorteil der Erhebung 14 deutlich wird, wenn man davon ausgeht, dass eine dazu passende Vertiefung an der unteren Stirnseite des jeweiligen Spannelementes 4 vorgesehen wird, denn dann wird beim Uebereinanderstapeln zweier oder mehrerer solcher Spannelemente 4 eine sichere Zentrierung erreicht, die den Aufbau an sich beliebig hoher Spannelemente aus solchen Einzelelementen 4 erlaubt, was bisher nicht möglich war.

Im Falle der Fig. 3 sind an einer Spannfläche 1 zwei Spannelemente 104a, 104b befestigt, wobei die Befestigungsschrauben der Einfachheit nicht gezeigt sind, zumal das Befestigen von Spannelementen dem Fachmanne geläufig ist. Wie schon erwähnt, unterscheiden sich die Elemente 104 von den Elementen 4 der Fig. 1A, 1B dadurch, dass aus dem vollen Zylinder eine Kreisringnut 17 rund um einen mittigen Zylinder 18 mit Ausnahme eines aus den Fig. 2A und 2B strichliert gezeigten Sektors mit den Begrenzungsflächen 16 ausgeschnitten ist. Es ist vorteilhaft, wenn die Höhe h dem Teinlungsraster (vgl. Fig. 2B) oder einem Bruchteil in Form eines Stammbruches davon, d.h. 1/2 oder 1/4, entspricht. Bevorzugt beträgt die Höhe h einem Viertel des Teilungsrasters, d.h. wenn a = 8 cm, so beträgt h = 2 cm, jedoch jeweils zuzüglich eines vorbestimmten Toleranzmasses.

Aus Fig. 3 ist auch die der Erhebung 14 entsprechende und diese beim Stapelm mehrerer Spannelemente in der Art der Fig. 1B die Erhebung 14 aufnehmende untere Ausnehmung 19 ersichtlich. Durch Schnitt in unterschiedlichen Ebenen ist sowohl eine Befestigungsöffnung 9 als auch eine Spannbohrung 10 ersichtlich. Letztere ist bevorzugt mit einem Innengewinde 20 ausgestattet, um Spannschrauben 5, 105 einschrauben zu können, wie dies mit herkömmlichen Spannelementen und dazu passenden Spannschrauben auch geschieht, insbesondere, um auch Kugeldruckschrauben verwenden zu können. An sich wäre es aber ebenso möglich, Bohrungen ohne Gewinde vorzusehen, und entsprechende Spannstangen mit Muttern und Gegenmuttern am Spannelement festzuhalten, wozu die Nut 17 Gelegenheit gibt. Ebenso kann die Befestigungsöffnung 9 mit oder ohne Gewinde ausgebildet sein.

In Fig. 3 sind zwei Anwendungsfälle anhand der beiden Spannelemente 104a, 104b dargestellt. Im Falle des Elementes 104a wird die Erhebung 14 als Anschlag für das Werkstück W verwendet, das damit sich einerseits an der äusseren Stirnfläche des Elemtes 104a in der richtigen Höhe und an der Mantelfläche der Erhebung 14 in richtiger seitlicher Ausrichtung abstützt. Dies entspricht den bisher am Markte befindlichen Anschlagelementen. Dagegen wird beim Spannelement 104b von der Anschlagfunktion kein Gebrauch gemacht, und die obere Stirnfläche dieses Elementes dient nur dazu, das Werkstück in der richtigen Höhe zu unterstützen, d.h. es übernimmt die Funktion der bisher hierfür vorgesehenen Anstellelemente. Da ein Werkstück W meist nicht dem Teilungsraster entspricht, ist diese Kombination von Anschlagelement zur Definition der seitlichen Ausrichtung und Anstellelement zur Sicherung der Höhenlage in der Praxis recht häufig, kann aber erfindungsgemäss mit einem einzigen Typ von Spannelement bewerkstelligt werden.

Fig. 4 zeigt eine Anwendung für ein komplizierteres Werkstück W3. Zunächst einmal sind wiederum mehrere Spannelemente 104, 104c zu einem Turm zusammengestapelt, ähnlich wie dies anhand der Fig. 1B gezeigt worden ist. Auf diese Weise erreicht man die Funktion eines bisher gesonderten Spannelementes, das herkömmlich als Höhenspannblock bezeichnet wird. Hierzu brauchen nur in das oberste Spannelement jeweils entsprechende Spannschrauben 5 eingeschraubt und eine Bride 21 (ähnlich den Briden 21 in Fig. 3) befestigt zu werden, um das Werkstück W3 aufrecht stehend zu halten. Nach unten hin sitzt das Werkstück W3 dann auf der Spannfläche 1 auf und ist in seiner Höhe gesichert.

Da das Werkstück W3 relativ gross ist, könnte eine nur geringe Winkelverschwenkung eine schlechte Lage und damit eine falsche Bearbeitung nach sich ziehen. Daher wird in der Ringnut 17 des untersten Spannelementes 104c mit Hilfe nicht dargestellter Spannschrauben im Inneren des Elementes 104c ein an die Position des Werkstückes W3 anpassbarer Anschlag 22 festgeklemmt und so das Element 104c als verstellbares Anschlagelement ausgebildet, das das Werkstück W3 sicher in seiner Lage hält.

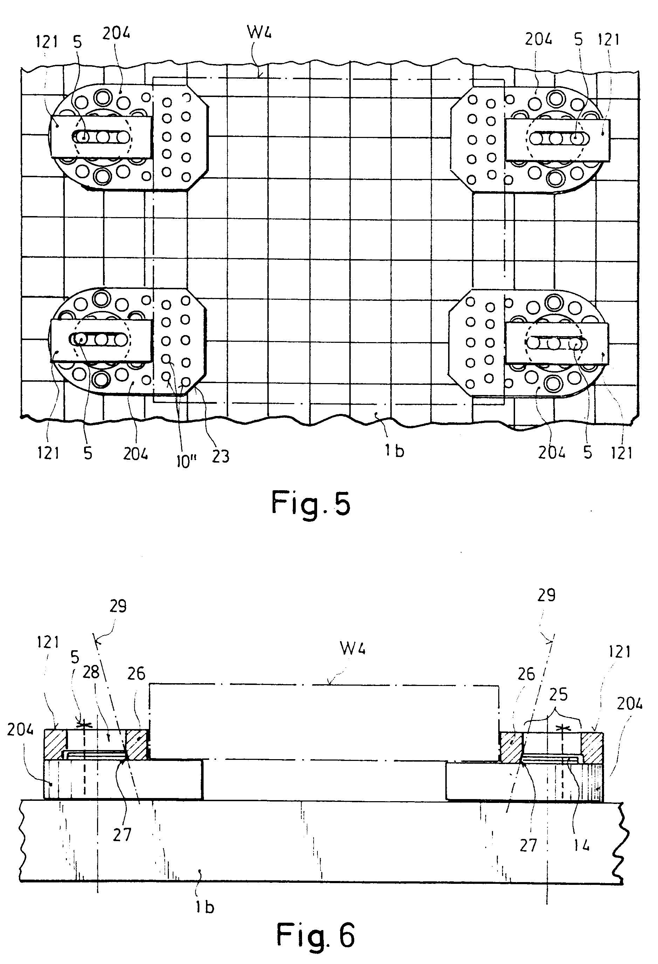

Die Nut 17 könnte auch für jenen Zweck verwendet werden, der nun anhand eines weiteren erfindungsgemässen Ausführungsbeispieles erläutert wird. An der rechten Seite der Fig. 4 ist nämlich über dem untersten Element 104 ein Element 204 in den Turm eingesetzt. Dieses besitzt - vorragend über den Kreis der Bohrungen (vgl. Fig. 5) einen Konsolfortsatz 23, in dem - wie besonders Fig. 5 durch Achskreuze angedeutet zeigt - vorteilhaft eine Anzahl von Spannbohrungen 10'' besitzt. In eine solche Spannbohrung ist in Fig. 4 eine Kugeldruckschraube 24 eingesetzt, um das Werkstück W3 in einer Ausnehmung desselben zu unterstützen, wobei die am Ende der Schraube 24 eingesetzte, oben abgeflachte Kugel für einen Ausgleich allfälliger Unebenheiten sorgt. Es versteht sich, dass die von dem Spannelement 204 ausgeübte Funktion auch durch das Spannelement 104 ausgeübt werden könnte, wenn nämlich ein dem Konsolfortsatz 23 entsprechender Teil - ähnlich dem Anschlagstück 22 in die Nut 17 eingesetzt würde. In einem solchen Falle würde dieser eingesetzte Konsolfortsatz jedoch nicht wie ein verstellbarer Anschlag 22 lediglich eingeklemmt, sondern wiese zweckmässig für die Befestigung entsprechende, mit den Spannbohrungen des Elementes 104 fluchtende Bohrungen auf, um so eine definierte Lage des so eingesetzten Konsolfortsatzes zu sichern. Da anderseits die Lage einer Unterstützungsschraube 24 nicht unbedingt definiert zu sein braucht, sind solche Befestigungsbohrungen im Konsolfortsatz zwar vorteilhaft, aber nicht zwangsläufig notwendig.

Fig. 5 zeigt vier solcher Spannelemente 204 zum Horizontalspannen eines Werkstückes W4 mit Hilfe von Briden 121. Diese Briden 121 müssen dabei eine Spannfunktion beim Niederziehen mit Hilfe eines sie gegen das Spannelement 204 pressenden Spannschraube 5 ausüben, d.h. sie müssen das Werkstück mit dem Niederschrauben zunehmend unter seitlichen Druck setzen. Zu diesem Zwecke werden sie mit dem dem Werkstück W4 entfernten Ende auf das Element aufgesetzt und schräg in Richtung auf das Werkstück W4 gehalten, worauf sie beim Einschrauben der Schraube 5 mehr und mehr seitlichen Druck auf das Werkstück W4 ausüben.

Die Brieden 121 besitzen in üblicher Weise einen relativ flachen Körperabschnitt 25, der oberhalb der Erhebung 14 zu liegen kommt, wie besonders aus Fig. 6 hervorgeht. An ihrer dem Werkstück W4 zugekehrten Seite besitzen sie eine Querschnittsverdickung 26, die über eine an der Unterseite vorgesehene Stufenfläche 27 in den flachen Zentralabschnitt 25 übergeht. Im Zentralabschnitt 25 befindet sich eine als Langloch ausgebildete Befestigungsöffnung 28.

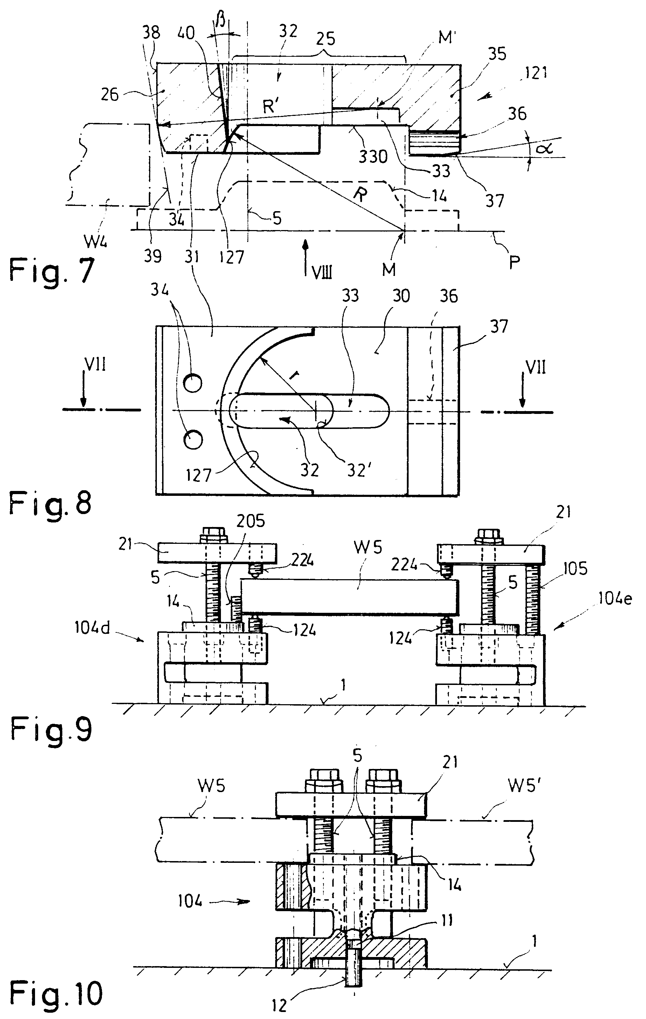

Während herkömmlich die Stufenfläche 27 - und meist ebenso eine Gegenfläche des Spannelementes - in der in Fig. 6 gezeigten Weise schräg verläuft, und zwar einer Neigungslinie 29, ist eine verbesserte Ausführungsform aus den Fig. 7 und 8 erkennbar. Es sei jedoch erwähnt, dass es im Rahmen der Erfindung liegt. die Erhebung 14 statt zylindrisch, wie in den bisher beschriebenen Ausführungsbeispielen, kegelstumpfförmig auszubilden, wie dies aus Fig. 6 ersichtlich ist, um so die Niederzug-Spannfunktion besser erfüllen zu können und die Bride 121 flächig zu führen, obwohl eine solche Bride 121 mit einer Neigung 29 auch über die Kante einer Zylindererhebung 14 gleiten könnte.

Es wurde nun gefunden, dass sich die Seitenspannfunktion beim Niederziehen günstiger erfüllen lässt, wenn die Neigung 29 nicht in der bekannten Weise gleichförmig verläuft, sondern entlang einer Kurve, insbesondere entlang eines Kreises. Diese Ausführung soll nun anhand einer erfindungsgemässen Bride gemäss den Fig. 7 und 8 erläutert werden. Dabei ist eine Bride 221 mit flachem Zentralteil 25 und verdicktem Vorderteil 26 gezeigt, wobei der Zentralteil 25 an seiner Unterseite durch eine Begrenzungsfläche 30, der verdickte Vorderteil durch eine Untersichtfläche 31 begrenzt ist. Beide Flächen 30, 31 sind eben und zueinander parallel und über eine Stufenfläche 127 miteinander verbunden, die eine Neigung aufweist. Wie besonders Fig. 8 veranschaulicht, verläuft die Stufenfläche 127 in einem Halbkreis mit dem Radius r, der seinen Mittelpunkt im Zentrum einer Rundung 32' eines Befestigungsschlitzes 32 hat. Im Anschluss an diesen Schlitz 32 ist eine Nut 33 vorgesehen. In der Fläche 31 befinden sich zwei Bohrungen 34. Ferner besitzt die Bride 121 einen hinteren Absatz 35 gleicher Stärke wie die Verdickung 26 mit einer am unteren Ende durchgehenden Querbohrung 36.

Die Neigung der Stufenfläche 127 ist nun nicht gleichmässig, sondern folgt einer Krümmung mit dem Radius R, dessen Mittelpunkt auf einer zu den Flächen 30 und 31 parallelen, darunterliegenden Ebene liegt (wobei der Ausdruck "darunter" von der normalen Stellung einer solchen Bride im Gebrauch ausgeht). Diese Parallelebene ist in Fig. 7 mit P bezeichnet. Wie die nach oben, ausgehend vom Mittelpunkt des Radius R, führende strichpunktierte Linie zeigt, liegt dieser Mittelpunkt im Bereiche der inneren Absatzfläche des Absatzes 35.

Wenn also diese Bride mit dem Absatz 35 auf das Spannelement 204 (vgl. Fig. 6) aufgesetzt und dabei mit der Verdickung 26 schräg nach oben gehalten wird, steht sie zweckmässig auf einer schrägen Absatzfläche 37, die unter einem Winkel alpha zur Ebene der Fläche 31 geneigt ist. Wird dann eine lediglich strich-punktiert angedeutete Spannschraube durch die Oeffnung 32 gesteckt und die Bride 121 niedergeschraubt, so gleitet die Stufenfläche 127 an der Kante der Erhebung 14 (strichliert angedeutet) abwärts. Wenn nun diese Erhebung 14 eine ebenso gekrümmte Neigung besitzt, wie dies in Fig. 7 angedeutet ist, so erhält die Bride 121 eine Führung bei ihrer Abwärtsbewegung, die sie nach vorne zu gegen das Werkstück W4 zu verschiebt. Dabei nimmt die Neigung der Bride zur gezeigten Horizontallage immer mehr ab, wobei ihre Nasenfläche 38 der Seitenfläche des Werkstückes W4 entlanggleitet. Deshalb ist es vorteilhaft, wenn auch diese Nasenfläche 38 eine Abschrägung entsprechend einer Linie 39 besitzt, die vorzugsweise nur eine Tangente an eine Krümmung darstellt (d.h. die mittlere Tangente), welche Krümmung zweckmässig denselben Radius besitzt, wie die Stufenfläche 127, nämlich Radius R.

Da wegen der anfänglichen Schräglage der Bride entsprechend der Neigung des Winkels alpha an der Fläche 37 Platz für die Schraube 5 innerhalb der Oeffnung 32 vorgesehen sein muss, wird zweckmässig deren Vorderfläche 40 angeschrägt und zwar um einen Winkel beta, der mindestens so gross wie der Winkel alpha sein sollte, vorzugsweise gleich gross ist.

Es versteht sich, dass die Krümmung der Stufenfläche 127 unabhängig davon ist, ob eine entsprechende Krümmung auch an der Erhebung 14 angebracht ist, doch verbessert sich dadurch die Führung, zumal die beschriebene Kippbewegung der Bride einer Schwenkung um die Absatzfläche 37 entspricht, weshalb der Mittelpunkt M des Radius R möglichst nahe dem Absatze 35 liegen soll. Der Mittelpunkt des vorderen Radius R' ist dementsprechend nach vorne versetzt (vgl. den Punkt M'). Da die durch den Radius R' geschaffene Neigung entgegengesetzt zu der der Stufenfläche 127 verläuft (diese ist überdies konkav, die Nasenfläche 38 konvex gewölbt), liegt auch der Mittelpunkt M' in einer Parallelebene zur Ebene der Fläche 31, jedoch gegenüber dieser nach oben versetzt.

Die Fig. 9 veranschaulicht die Anwendung des Spannelementes gemäss Fig. 3 bzw. eines Paares davon als Pendelanschlagelement 104d und als Pendelanstellelement 104e. In beiden Fällen werden Kugeldruckschrauben 124, 224 verwendet, um ein Werkstück W5 sicher zu halten und eventuelle Unebenheiten durch entsprechende Kugelneigung dieser Schrauben auszugleichen. In einem solchen Falle kann die Mantelfläche der Erhebung 14 des Anschlagelementes 104d nur schwer bzw. gar nicht als Anschlag verwendet werden, doch mag eine in eine Spannbohrung 10'(vgl. Fig. 2A) des inneren Kreises von Bohrungen eingesetzte Spannschraube 205 für diesen Zweck dienlich sein. Am Anstellelement 104e dagegen wird das Werkstück W5 lediglich in der richtigen Höhe gehalten, ohne an einer Anschlagfläche anzuliegen, wobei die zugehörige Bride 21 durch zwei Spannschrauben 5, 105 befestigt sein kann.

Das Spannelement 104 kann auch als Doppelspanner mit oder ohne Anschlagfunktion verwendet werden, wie Fig. 10 zeigt, wobei diese Funktion beispielsweise auch von einer Ausführungsform gemäss Fig. 1 erfüllt werden könnte. Hier werden gleichzeitig zwei Werkstücke W5, W5' gleicher Stärke von einer gemeinsamen Bride 21 gehalten, durch deren Schlitzöffnung zwei Spannschrauben 5 gesteckt und in entsprechenden Spannbohrungen 10' des inneren Kreises eingeschraubt sind. Es ist ersichtlich, dass dabei das Werkstück W5 an der als Anschlag dienenden Mantelfläche der Erhebung 14 anliegt. Ferner zeigt diese Figur, wie ein Positionierstift 12 innerhalb der zentralen Oeffnung 11 zum Vorpositionieren in die Spannfläche 1 eingesetzt ist, bevor das Spannelement 104 an dieser Fläche 1 endgültig befestigt wird. Die zentrale Oeffnung 11 kann, wie gezeigt, allenfalls mit einem Innengewinde ausgestattet sein, um auch diese Oeffnung als Spannbohrung verwenden zu können.

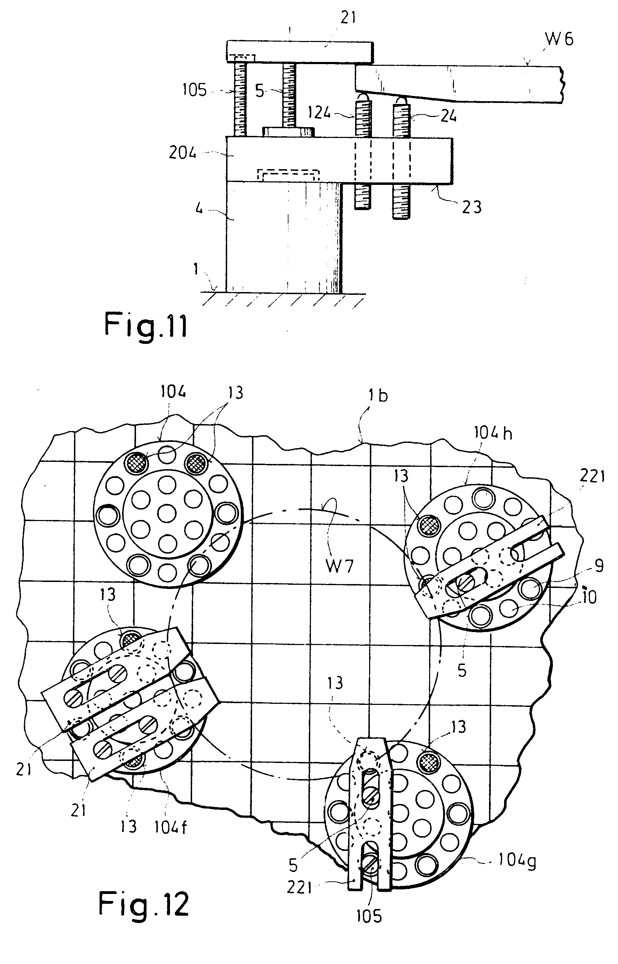

Gemäss Fig. 11 sind die Elemente 4 und 204 miteinander kombiniert, um als Unterlagenset bzw. Höhenspanner-Element zu wirken. Es sei hier nochmals darauf hingewiesen, dass diese Funktion auch mit einem Spannelement 104 mit Nut 17 erreicht werden könnte, in welche Nut ein entsprechender Konsolfortsatz eingesetzt ist. Im vorliegenden Falle sind zwei Kugeldruckschrauben 24 und 124 in den Konsolfortsatz 23 eingesetzt, und zwar in verschiedenen Höhen, um sich einer unteren Schrägfläche eines Werkstückes W6 anzupassen. Dieses Werkstück W6 wird zur Bearbeitung in einem vorbestimmten, durch die Höhe der Bride 21 und damit durch die Länge der Spannschrauben 5, 105 bestimmten Niveau gehalten.

Anhand der Fig. 12 soll das Aufspannen eines runden Werkstückes W7 auf einer Spannfläche 1b mit Hilfe von vier Spannelementen 104 erläutert werden. Das Werkstück W7 liegt dabei auf den äusseren Stirnflächen der Spannelemente 104 in definierter Höhe auf und wird durch Briden 21 bzw. 221 gehalten, die hier nur als Beispiel für Bridenausbildungen veranschaulicht sind. Es ist ersichtlich, dass die Anordnung der Oeffnungen und Bohrungen 9 bzw. 10 in zwei (oder mehr) Kreisen bzw. an den Eckpunkten eines Sechseckes die Möglichkeit bietet, die jeweils optimale Befestigung der Briden 21, 221 zu wählen, um die nötige Spannkraft aufzubringen. Falls es erforderlich ist, für die Bearbeitung eine erhöhte Spannkraft bereitzustellen, ist es denkbar, zwei Briden 21 an einem Spannelement 104f anzubringen, was die Spannkraft dementsprechend verdoppelt. Anderseits wird anhand dieses Beispieles nochmals die grosse Variationsmöglichkeit der Befestigung der Spannelemente 104 an der Spannfläche 1b deutlich (die Befestigungsschrauben 13 sind jeweils mit weggeschnittenem Kopf gezeigt). Während die Bride 221 des Spannelementes 104g mit zwei Spannschrauben 5, 105 befestigt ist, ist für die Bride 221 des Elementes 104h nur eine einzige Spannschraube 5 vorgesehen, d.h. es lässt sich auch auf diese Weise die Spannkraft den Erfordernissen anpassen.

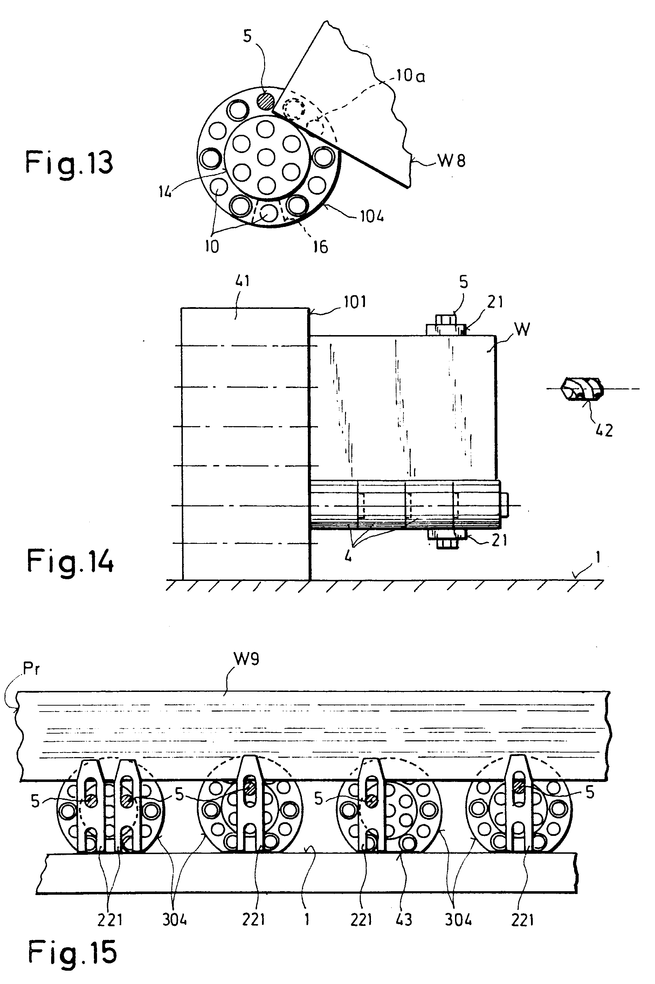

Es wurde bereits darauf hingewiesen, dass erfindungsgemässe Spannelemente sich auch besonders als starre Anschlagelemente eignen. Fig. 13 veranschaulicht, dass sich damit eine Ausrichtung in drei räumliche Achsen erzielen lässt. Dabei liegt ein Werkstück W8 mit einer Kante an der Mantelfläche der Erhebung 14 an, die so als Anschlag in der einen räumlichen Richtung dient. Mit der anderen Kante legt sich das Werkstück W8 an eine in eine Spannbohrung 10 des äusseren Kreises eingeschraubte Spannschraube 5, die einen Anschlag in einer zur ersten senkrechten zweiten Richtung bildet. Schliesslich kann eine Ausrichtung des Werkstückes W8 auch der Höhe nach durch Einsetzen einer Spann- bzw. Kugeldruckschraube in die unter dem Werkstück W8 liegende Spannbohrung 10a erzielt werden.

Verschiedentlich sind als Zubehör zu Spannplatten 1 (Fig. 14) auch Spannwürfel 41 in verschiedenen Formen am Markte, um eine vertikale Spannfläche 101 zu bilden. Hier kann eine Reihe erfindungsgemässer Spannelemente 4 (oder 104) in der schon beschriebenen. Weise zusammengespannt werden, um einen Doppelwinkel als Auflieger für ein Werkstück W zu bilden, das beispielsweise mit Hilfe von Briden 21 und einer Spannschraube 5 daran befestigt wird, um mittels eines spanabhebenden Werkzeuges 42 an einer Fläche bearbeitet zu werden. Die strich-punktierten Linien am Spannwürfel 41 sollen die daran vorgesehene Teilung der Aufnahmevertiefungen andeuten.

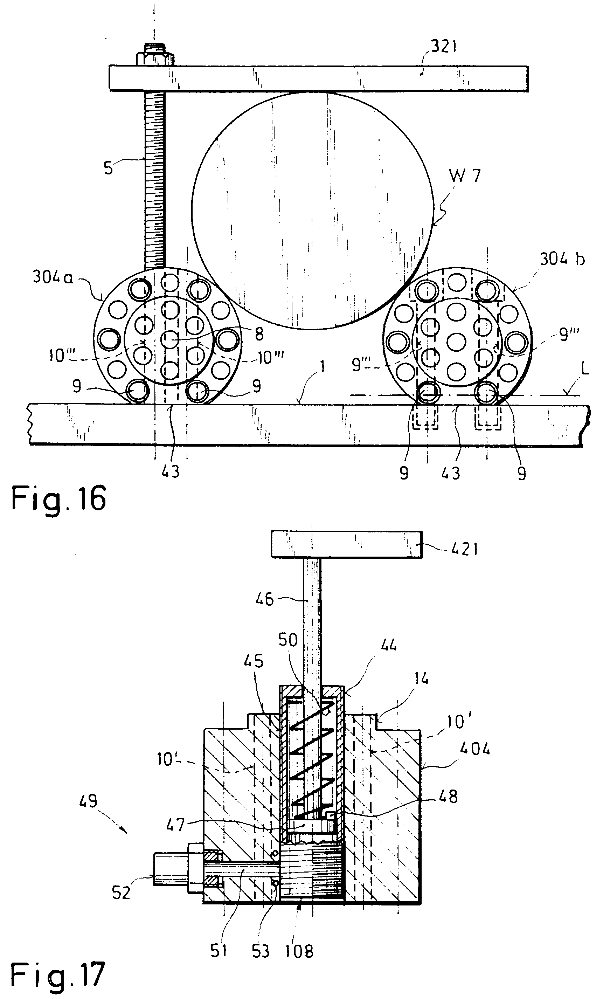

Weitere Anwendungsmöglichkeiten ergeben sich bei einer erfindungsgemässen weiteren Ausführungsform gemäss Fig. 15. Hier soll eine Profilleiste W zu dem links gezeigten Profil Pr gefräst werden. Zu diesem Zwecke werden herkömmlich mehrere (teure) Schraubstöcke verwendet, die gemäss Fig. 15 durch dieselbe Anzahl von Spannelementen 304 ersetzt werden, die wesentlich billiger herstellbar sind. Die Spannelemente 304 unterscheiden sich von den Spannelementen 4 oder 104 lediglich dadurch, dass sie eine abgeflachte Mantelfläche 43 besitzen, mit der sie auf einer Spannfläche 1 aufgespannt werden können. Wie diese Aufspannung erfolgt, wird noch anhand der Fig. 16 beschrieben werden. Wie schon anhand der Fig. 12 gezeigt und erläutert, können die dazu nötigen Briden 221 ganz nach Wunsch und Erfordernis angebracht werden, wie dies Fig. 15 veranschaulicht. Die jeweilige Spannschraube 5 zum Befestigen dieser Briden 221 ist hier nur als Schnitt durch ihren Schaft angedeutet.

Zwei solcher Spannelemente 304a, 304b dienen gemäss Fig. 16 als Spannprismen für das runde Werkstück W7 an der Spannfläche 1. Etwa in der Mitte ihrer axialen Länge (bei mehreren Spannbohrungen über die axiale Länge verteilt) befindet sich eine senkrecht auf die Abflachung 43 stehende Spannbohrung 10'''. An sich ist es nicht unbedingt erforderlich, die Spannbohrung 10''' senkrecht auf die Fläche 43 auszurichten, doch wird es für die meisten Anwendungsfälle - und so auch hier - von Vorteil sein. Da die Spannbohrung 10''' zweckmässig aussermittig verläuft, d.h. nicht durch die Zentrierbohrung 8 hindurch, kann es günstig sein, symmetrisch zur Mittelachse eine weitere solche Spannbohrung 10''' (oder sogar mehrere davon in Achsrichtung verteilt) vorzusehen.

Für die Befestigung solcher Prismenelemente an der Spannfläche 1 sind an sich nur ein, vorzugsweise aber zwei, Befestigungsbohrungen 9''' erforderlich, die beispielsweise in Achsrichtung aussermittig, angeordnet sind. Eine aussermittige Anordnung wird sich insbesondere dann ergeben, wenn drei oder vier Befestigungsöffnungen, zwei davon an einem Stirnflächenbereich an der Mantelfläche, der Rest gegenüber, angeordnet werden, wobei Spannbohrungen beispielsweise dazwischen angeordnet sind. Es sei darauf hingewiesen, dass die Abflachung 43 nicht unbedingt erforderlich ist, vielmehr auch ein Spannelement 4 oder 104 zu einer Anwendung gemäss den Fig. 15 und 16 ausgerüstet werden kann, wenn nur wenigstens eine Befestigungsöffnung 9''' und zweckmässig auch eine Spannbohrung 10''' vorgesehen wird, in welchem Falle anstelle der Abflachung 43 eine diese ersetzende Platte, vorzugsweise mit Befestigungsöffnungen für die Spannfläche am Spannelement befestigt werden kann, um eine Auflagerfläche auf der Spannfläche 1 zu bilden, In diesem letzteren Fall brauchen die Befestigungsöffnungen 9''' auch nicht unbedingt im Teilungsabstand liegen, weil sie ja lediglich dazu dienen, die besagte Platte am Spannelement 4 oder 104 zu befestigen, wogegen diese Platte an der Spannfläche 1 entweder durch wenigstens eine Befestigungsöffnung in ihr oder zwei im Teilungsabstand befindliche Befestigungsöffnungen (allenfalls auch mehrere) befestigt werden kann, alternativ auch einfach durch eine an der Spannfläche befestigte und sich quer über die Platte erstreckende Bride.

Sobald das Werkstück W7 auf den Spannelementen 304 gelagert ist, braucht es darauf nur noch festgespannt zu werden. Dies geschieht mit Hilfe einer Spannschraube 5, die in die Spannbohrung 10''' eingeschraubt wird, und auf der ein das Werkstück W7 festspannendes Spanneisen 321 befestigt wird. Das Spanneisen 321 kann gewünschtenfalls auch noch über eine weitere Spannschraube an seinem anderen Ende befestigt werden, welche Spannschraube dann in eine (nicht gezeigte) Spannbohrung 10''' des Spannelementes 304b einzuschrauben wäre.

Gemäss Fig. 16 verläuft die Abflachung 43 parallel zu einer durch die Zentren der Befestigungsbohrungen 9 verlaufenden Linie L, wobei durch die Sekante der Fläche 43 eine Spannbohrung wegfällt. Im Prinzip entspricht dies auch der bevorzugten Ausführung, doch wurde oben bereits darauf hingewiesen, dass sich an der Funktion kaum etwas ändert, wenn eine Befestigungsöffnung durch eine Spannbohrung ersetzt würde, d.h. die Abflachung 43 könnte ebensogut parallel zu einer durch die Zentren zweier Spannbohrungen verlaufenden Linie liegen, in welchem Falle dann eine Befestigungsöffnung 9 wegfallen würde.

Fig. 17 veranschaulicht eine weitere Ausführungsform der Erfindung, bei der ein Spannelement 404 prinzipiell gleich ausgebildet sein kann, wie dies vorher anhand der Elemente 4, 104 oder 304 beschrieben wurde. Deshalb sind in Fig. 17 die bereits beschriebenen Bohrungen und Oeffnungen lediglich durch strichpunktierte Linien angedeutet. Abweichend von den bisher beschriebenen Formen besitzt aber das Spannelement 404 eine mittlere Bohrung 108 grossen Durchmessers, in die beispielsweise ein Innengewinde eingeschnitten ist, um einen Zylinder 44 aufzunehmen und sicher zu verbinden. Das gezeigte Innengewinde 45 verläuft über die gesamte Länge der Bohrung, und der Zylinder 44 besitzt ein über seine ganze Länge reichendes Aussengewinde, doch ist weder dieses Faktum noch überhaupt die Anordnung eines Gewindes essentiell. Denn ebenso wäre als Verbindung eine Bajonettverbindung wählbar bzw. könnte der Zylinder 44 geringeren Durchmesser als die Bohrung 108 besitzen und mittels eines an ihm befestigten Gewinderinges eingeschraubt werden.

Zylinder 44 mit einer Kolbenstange 46 und einem Halteorgan 421, das nach Art einer Bride wirkt, sind bekannt und am Markte erhältlich. Dies gilt auch für Zylinder 44 solcher Art, bei denen die Kolbenstange 46 bei ihrer Axialbewegung eine Drehung um 90° ausführt, beispielsweise indem mit dem Kolben 47 (oder der Kolbenstange) ein Nockenfolger 48 verbunden ist, der in eine nicht gezeigte Schraubennut grosser Steigung eingreift. Dadurch kann das bridenartige Halteorgan unter Wegschwenken um 90° hochgehoben und unter Verschwenken in die gezeigte Ausrichtung auf ein Werkstück abgesenkt werden.

Um den Zylinder 44 zu betätigen, ist mindestens ein Fluidanschluss 49 nötig, um den Kolben 47 entgegen dem Drucke einer Druckfeder 50 zu heben. Dieser Fluidanschluss 49 umfasst jedenfalls einen das Spannelement 404, insbesondere radial, durchquerenden Fluidkanal 51, an den nach aussen hin ein, zweckmässig anschraubbarer Anschlussnippel 52 angefügt ist, um einen Schlauch oder ein Zuleitungsrohr anschliessen zu können. Der Kanal 51 ist nach dem vollständigen Einschrauben des Zylinders 44 in die Bohrung 108 in gleicher Höhe mit einem (nicht gezeigten) Zuleitungskanal des Zylinders 44, so dass das über den Kanal 44 zufliessende Medium (pneumatisch oder hydraulisch) in das Innere des Zylinders 44 gelangt, um den Kolben 47 anzuheben. Es mag vorteilhaft sein, im Bereiche der inneren Ausmündung des Kanals 51 eine Dichtung 53 (O-Ring od.dgl.) anzuordnen.

In Fig. 17 sind die Spannbohrungen 10' des inneren Kreises, die bis zur Stirnfläche der Erhebung 14 reichen, strichliert eingezeichnet. Ob für solche Spannbohrungen 10' aber noch Raum zur Verfügung steht, hängt vom Durchmesser des verwendeten Zylinders ab. Denkbar wäre es, in einem solchen Falle auf die Spannbohrungen 10' ganz zu verzichten, um die Zentralbohrung 108 entsprechend grösser machen zu können, falls es erwünscht ist, Zylinder grösseren Durchmessers zu verwenden. Denkbar wäre es aber auch, eine Zentralbohrung 108 mit dem Durchmesser der Erhebung 14 vorzusehen, um wahlweise einen Einsatz einzuschrauben, der aus einem entsprechend dicken Zylinder 44 besteht oder einen solchen, der eine Erhebung 14 mit Spannbohrungen 10' bildet.

Diese letztere Möglichkeit ist grundsätzlich gegeben, d.h. das Spannelement 4, 104 oder 304 bzw. 404 kann zweiteilig (oder sogar mehrteilig) ausgebildet sein, beispielsweise indem die Erhebung 14 als einschraubbarer Kern des Spannelementes ausgebildet ist. Bevorzugt ist allerdings eine einstückige Ausbildung.

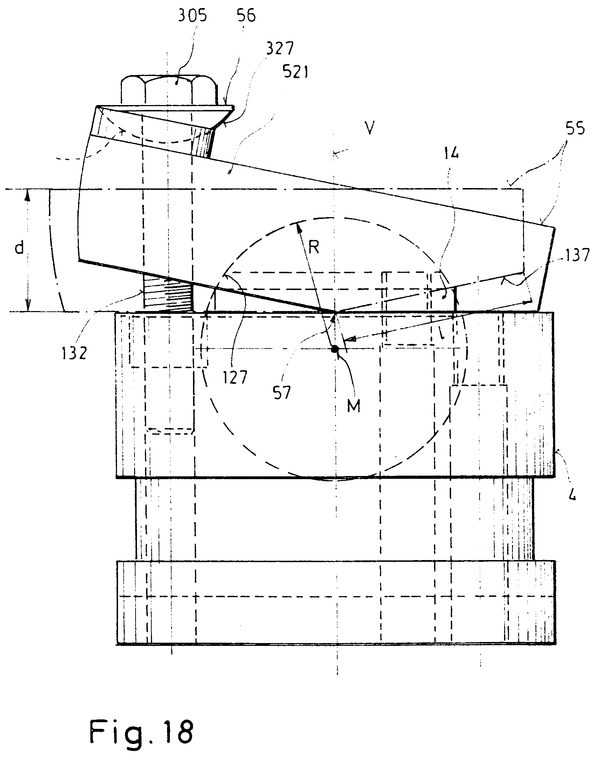

Gemäss Fig. 18 weist eine erfindungsgemässe Bride 521 - alternativ oder zusätzlich zur als Auflagefläche an der Erhebung 14 (vgl. Fig. 7) dienenden konkav gekrümmten Stufenfläche 127 mit dem Radius R auch noch eine an der dem Spannelement 4 abzukehrenden, oberen Begrenzungsfläche 55, und zwar im Bereiche einer Befestigungsöffnung 132 für die Spannschraube 305 gelegene, kugelkalottenförmig gekrümmte Auflagefläche 227 auf, die im dargestellten, bevorzugten Ausführungsbeispiel konkav ausgebildet ist.

Diese Auflagefläche 227 dient zur Abstützung einer entsprechend, vorzugsweise mit gleichem Krümmungsradius geformten Gegenauflagefläche 327 an der Schraube 305, wobei die Fläche 327 entweder unmittelbar an der Unterseite des Kopfes der Schraube 305 ausgebildet sein kann. Bevorzugt ist es jedoch, wenn die Fläche 327 an einer auf die Schraube 305 aufsteckbaren Beilagscheibe 56 ausgebildet ist, weil dies die Verwendung von Normschrauben ermöglicht.

Wie aus Fig. 18 und den darin gezeigten beiden Positionen der Bride 521 ersichtlich ist, liegt der Vorteil einer solchen Ausbildung darin, dass der Schraubenkopf bzw. die Beilagscheibe 56 auch bei einer relativ starken Schräglage der Bride 521 bezüglich einer Horizontalebene bzw. des Spannelementes 4 mit der vollen Untersichtfläche aufliegt, und dies unabhängig vom Neigungswinkel zum Spannelement 4. Ausserdem ist eine Verschmutzung durch Späne praktisch unmöglich.

Vorteilhaft ist es in diesem Zusammenhang, wenn die schräge Endfläche an der dem (in Fig. 18 links aufzuspannenden) Werkstück abgekehrten Ende (rechts) länger (im Vergleich zur Fläche 37 der Fig. 7) ausgebildet ist. Zweckmässig ist die Länge 1 derart bemessen, dass die den Beginn dieser Schrägfläche 137 definierende Abschrägungskante 57 in einer gemeinsamen Vertikalebene V mit dem Krümmungsmittelpunkt M des die Fläche 127 begrenzenden Kreises liegt. Es ist auch zweckmässig, wenn die Länge 1 grösser als die Dicke d der Bride 521 ist.

Aus den obigen Erläuterungen ist wohl ersichtlich, dass das jeweilige Spannelement 4, 104, 204, 304, 404 zweckmässig, jedoch nicht notwendigerweise an seiner Auflagefläche, mit der es gegen die Spannfläche 1 zu liegen kommt, die Ausnehmung 19 besitzt, die übrigens genau so, entsprechend, abgerundet sein kann, wie dies an Hand der Bride 121 (Fig. 7) und der Stufenfläche 127 beschrieben wurde. Die der Auflagefläche gegenüberliegende Spannfläche kann, aber muss nicht, eine Erhebung 14 besitzen, die allenfalls eine ebensolche Stufenfläche 127 wie die Bride 121 aufweist. Ferner ergibt sich aus den Fig. 7 und 8, dass die Stufenfläche 127 in doppelter Hinsicht gekrümmt ist, nämlich in der einen Ebene mit dem Radius R, in der anderen Ebene mit dem Radius r, so dass sie letztlich einer kugelkalottenfläche entspricht, soferne die Radien R und r gleich gross sind. Eine solche Ausführungsform ist bevorzugt.

## Patentansprüche

1. Spannvorrichtung mit einer Spannfläche (1) mit entsprechend einer vorbestimmten Teilung über ihre Fläche verteilten Aufnahmevertiefungen (2,3) zum Spannen eines Werkstückes (W), mit einem eine Auflagefläche und eine dieser gegenüberliegenden Spannfläche aufweisenden Spannkörper (4,104,204,304,404) und mindestens zwei jeweils im Teilungsabstand voneinander entfernten Befestigungsöffnungen (9) sowie mit wenigstens einer Spannbohrung (10), die sich senkrecht zur Ebene der Auflagefläche erstreckt, wobei die Befestigungsöffnungen (9) entlang mindestens eines um eine Längsachse (8) herum angeordneten Kreises gleichmäßig verteilt sind, **dadurch gekennzeichnet, daß** sechs Befestigungsöffnungen (9) in gleichen Winkelabständen auf dem Kreis angeordnet sind, wobei der Abstand zweier jeweils benachbarter Befestigungsöffnungen (9) dem Teilungsabstand entspricht.

2. Spannvorrichtung nach Anspruch 1, **dadurch gekennzeichnet, daß** auf dem Kreis zwischen den Befestigungsöffnungen (9) Spannbohrungen (10) angeordnet sind.

3. Spannvorrichtung nach Anspruch 1 oder 2, **dadurch gekennzeichnet, daß** auf einem weiteren, zum ersten Kreis konzentrischen Kreis mit halbem Durchmesser weitere Befestigungsöffnungen und/oder Spannbohrungen (10') vorgesehen sind.

4. Spannvorrichtung nach Anspruch 3, **dadurch gekennzeichnet, daß** der weitere Kreis auf einer einen Teil der Spannfläche bildenden Erhebung (14) liegt.

5. Spannvorrichtung nach einem der Ansprüche 3 oder 4, **dadurch gekennzeichnet, daß** die Bohrungen bzw. Öffnungen (10') des inneres Kreises mit der Winkelteilung der Befestigungsöffnungen (9) bzw. Spannbohrungen (10) des ersten Kreises übereinstimmen.

6. Spannvorrichtung nach einem der vorhergehenden Ansprüche, **dadurch gekennzeichnet, daß** mindestens eine Befestigungsöffnung (9''') vorgesehen ist, die sich zwischen seinen beiden axialen Enden senkrecht zu einer durch die Längsachse (8) verlaufenden Ebene erstreckt und daß mindestens eine Spannbohrung (10''') vorgesehen ist, die parallel zu dieser Befestigungsbohrung (9''') ausgerichtet ist.

7. Spannvorrichtung nach einem der vorhergehenden Ansprüche, **dadurch gekennzeichnet, daß** entlang der Längsachse (8) ein axiales Positionierloch (11) bzw. eine Zentralbohrung (108) vorgesehen ist.

8. Spannvorrichtung nach einem der vorhergehenden Ansprüche, **dadurch gekennzeichnet, daß** der Spannkörper in der axialen Öffnung (108) einen fluidischen Hubzylinder (44) aufnimmt, wobei der Spannkörper eine Befestigungseinrichtung (45) sowie eine Fluidzufuhr zu diesem Hubzylinder aufweist und der Hubzylinder zur Betätigung einer Spanneinrichtung dient.

9. Spannvorrichtung nach einem der vorhergehenden Ansprüche, **dadurch gekennzeichnet, daß** der Spannkörper (4,104,204, 304,404) an seiner Auflagefläche eine zur Längsachse (8) koaxiale Ausnehmung (19) kreisförmigen Umfangs aufweist, deren Abmessung den Abmessungen einer Erhebung (14) auf der Spannfläche entspricht.

10. Spannvorrichtung nach einem der vorhergehenden Ansprüche, **dadurch gekennzeichnet, daß** die Erhebung (14) kreisförmigen Umfangs eine schräg zur Längsachse (8) verlaufende Mantelfläche (27,127) aufweist, die mit einer aufgelegten, in mindestens einer der Spannbohrungen (10) gehaltenen Spannklaue (Bride) zusammenwirkt.

## Claims

1. Clamping device with a clamping surface (1) having receiving recesses (2,3) distributed over its surface in accordance with a predetermined division spacing for clamping a workpiece (W), with a clamping body (4,104, 204,304,404) comprising a resting surface and a clamping surface being opposite said resting surface and at least two attachement openings (9) spaced apart from each other by the division spacing, as well as at least with one clamping hole (10) extending perpendicularly to the plane of the resting surface, the attachement holes (9) being distributed regularly along at least one circle arranged around a longitudinal axis (8) **characterized** in that six attachement holes (9) are arranged with uniform angular distances on a circle, the distance of two adjoining attachement holes (9) corresponding to the division spacing.

2. Clamping device according to claim 1, **characterized** in that clamping holes (10) are arranged on the circle between the attachement holes (9).

3. Clamping device according to claim 1 or 2, **characterized** in that further attachement openings and/or clamping holes (10') are provided on a further circle concentric with the first circle with half of the diameter.

4. Clamping device according to claim 3, **characterized** in that the further circle is arranged on a raised portion (14) forming a part of the clamping surface.

5. Clamping device according to claim 3 or 4, **characterized** in that the holes respectively the openings (10') of the inner circle correspond with the angular division of the attachement openings (9) respectively the clamping holes (10) of the first circle.

6. Clamping device according to one of the precedent claims, **characterized** in that at least one attachement opening (9''') is provided which extends between its two axial ends perpendicular to a plane which runs through the longitudinal axis (8), and that at least one clamping hole (10''') is provided which is arranged parallel to said clamping hole (9''').

7. Clamping device according to one of the precedent claims, **characterized** in that an axial positioning hole (11) respectively a central hole (108) is provided along the longitudinal axis (8).

8. Clamping device according to one of the precedent claims, **characterized** in that the clamping body includes in the axial opening (108) a fluidic lifting cylinder (44) the clamping body comprising attachement means (45) as well as a fluid supply for that lifting cylinder and the lifting cylinder serves for operating a clamping arrangement.

9. Clamping device according to one of the precedent claims, **characterized** in that the clamping body (4,104,204,304, 404) comprises on its resting surface a recess (19) with circular circumference coaxial to the longitudinal axis (8) the dimension of the recess corresponding with the dimension of a raised portion (14) on the clamping surface.

10. Clamping device according to one of the precedent claims, **characterized** in that the raised portion (14) with circular circumference comprises a surface area (27,127) running at an angle to the longitudinal axis (8) and acting in combination with a put-on clamping clutch (shackle) held in at least one of the clamping holes (10).

## Revendications

1. Appareillage pour le serrage d'une pièce (W) avec une surface de serrage (1) avec des rainures (2,3) de logement réparties à sa surface selon une division prédéfinie, comportant un corps de serrage, présentant une surface d'appui et une surface de serrage qui lui est opposée (4,104,204,304,404), et au moins deux ouvertures de fixation (9) espacées chacune d'une distance de division ainsi qu'avec au moins un trou de serrage (10), placé perpendiculairement au plan de la surface d'appui, les ouvertures de fixation (9) étant disposées et réparties régulièrement sur au moins une circonférence centrée sur un axe longitudinal (8), caractérisé en ce que six ouvertures de fixation (9) sont disposées angulairement sur la circonférence avec des entraxes entre deux ouvertures de fixation voisines (9) correspondant à la distance de division.

2. Appareillage de serrage suivant la revendication 1 caractérisé en ce que des trous de serrage (10) sont disposés sur la même circonférence que les ouvertures de fixation (9) et entre celles-ci.

3. Appareillage de serrage suivant l'une quelconque des revendications 1 et 2 caractérisé en ce que d'autres ouvertures des fixation et/ou trous de serrage (10') sont prévus sur une autre circonférence concentrique à la première et de diamètre égale à la moitié de la première.

4. Appareillage de serrage suivant la revendication 3 caractérisé en ce que l'autre circonférence se trouve sur un rehaussement (14) constitué sur une partie de la surface de serrage.

5. Appareillage de serrage suivant l'une quelconque des revendications 3 et 4 caractérisé en ce que la répartition angulaire des ouvertures ou trous (10') de la circonférence intérieure coincide avec celle des ouvertures de fixation (9) ou des trous de serrage (10) de la première circonférence.

6. Appareillage de serrage suivant l'une quelconque des revendications précédentes caractérisé en ce qu'il est prévu qu'au moins une ouverture de fixation (9''') s'étende entre ses deux extrémités axiales perpendiculairement à un plan passant par l'axe longitudinal (8) et en ce qu'il est prévu qu'au moins un trou de serrage (10''') soit aligné paralèllement à cette ouverture de fixation (9''').

7. Appareillage de serrage suivant l'une quelconque des revendications précédentes caractérisé en ce qu'il est prévu un trou de positionnement axial (11) ou un alésage central (108) sur l'axe longitudinal (8).

8. Appareillage de serrage suivant l'une quelconque des revendications précédentes caractérisé en ce que le corps de serrage reçoit un vérin hydraulique de levage (44) dans son alésage axial (108) et présente un dispositif de fixation (45) et une arrivée de fluide pour ce vérin servant à la commande d'un dispositif de serrage.

9. Appareillage de serrage suivant l'une quelconque des revendications précédentes caractérisé en ce que le corps de serrage (4,104,204,304,404) présente sur sa surface d'appui un évidement (19) de forme circulaire coaxial à l'axe longitudinal (8) dont les dimensions correspondent à celles d'un rehaussement (14) sur la surface de serrage.

10. Appareillage de serrage suivant l'une quelconque des revendications précédentes caractérisé en ce que le rehaussement (14) de forme cylindrique présente une surface (27,127) disposée en oblique sur son enveloppe par rapport à l'axe longitudinal (8), qui agit ensemble au minimum avec l'un des trous de serrage (10) et une bride de serrage rapportée et maintenue sur ce trou.
